Europäisches Patentamt

European Patent Office

Office européen des brevets

(11) Veröffentlichungsnummer: **0 423 473 A2**

# EUROPÄISCHE PATENTANMELDUNG

(21) Anmeldenummer: 90116613.2

(22) Anmeldetag: 30.08.90

(51) Int. Cl.⁵: **C08G 69/26**

(30) Priorität: 20.10.89 DE 3934927

(43) Veröffentlichungstag der Anmeldung:
24.04.91 Patentblatt 91/17

(84) Benannte Vertragsstaaten:
**AT BE CH DE FR GB IT LI NL**

(71) Anmelder: **HÜLS AKTIENGESELLSCHAFT**
**Patentabteilung / PB 15 - Postfach 13 20**
**W-4370 Marl 1(DE)**

(72) Erfinder: **Wenzel, Markus, Dr.**
**Im Romberg 55**
**W-4350 Recklinghausen(DE)**
Erfinder: **Bartmann, Martin, Dr.**
**Elper Weg 64**
**W-4350 Recklinghausen(DE)**
Erfinder: **Finke, Jürgen, Dr.**
**Münsterlandstrasse 22**
**W-4370 Marl(DE)**
Erfinder: **Panoch, Hans-Joachim, Dr.**
**Rehwinkel 14**
**W-4358 Haltern 7(DE)**

(54) Gegenüber Alkoholen und kochendes Wasser beständige Formmassen.

(57)
2.1 Gegenüber kochendes Wasser beständige Formmassen aus amorphen Copolyamiden konnten in ihrer Beständigkeit gegenüber Alkoholen nicht befriedigen. Es besteht daher das Bedürfnis, Formmassen aus Polyamid in diesem Sinne zu verbessern.
2.2 Die Erfindung beschreibt Formmassen auf Basis eines amorphen Copolyamids hergestellt aus
A. Isophthalsäure
und
B. 20 - 80 Mol-% n-Decamethylendiamin-1,10
20 - 80 Mol-% Bis(4-aminocyclohexyl)methan.
2.3 Die erfindungsgemäßen Formmassen erfüllen die gestellten Bedingungen.

EP 0 423 473 A2

## GEGENÜBER ALKOHOLEN UND KOCHENDES WASSER BESTÄNDIGE FORMMASSEN

Gegenstand der Erfindung sind gegenüber Alkoholen und kochendes Wasser beständige Formmassen auf Basis amorpher Copolyamide.

Gegen kochendes Wasser beständige Formmassen auf Basis amorpher polyamide sind bekannt (EP-PSS 50 742, 69 700 und DE-PS 36 00 015). Diese Formmassen weisen aber in ihrer Gebrauchstüchtigkeit einen entscheidenden Mangel auf - sie sind gegen Alkohole, wie z. B. Methanol, Ethanol, Propanole, Butanole o. ä. nicht beständig. Je nach dem neigen sie in Gegenwart von Alkoholen zur Trübung, zum Quellen oder Verkleben; teilweise lösen sie sich in Alkohol völlig auf. Für viele Anwendungszwecke, wie z. B. für Brillengestle oder Apparateschaugläser, ist jedoch die Beständigkeit gegen Alkohole unabdingbare Notwendigkeit.

Aufgabe der Erfindung war es, Formmassen zur Verfügung zu stellen, die die oben genannten Nachteile nicht aufweisen, ohne jedoch ihre anderen vorteilhaften Eigenschaften zu verlieren.

Diese Aufgabe wurde gelöst mit Hilfe von Copolyamiden, die durch Polykondensieren von
A. Isophthalsäure
mit
B. 20 - 80 Mol-% n-Decamethylendiamin-1,10
20 - 80 Mol-% Bis(4-aminocyclohexyl)methan erhalten worden sind.

Bevorzugt sind Formmassen, die Copolyamide zur Basis haben, die durch Polykondensieren von
A. Isophthalsäure
mit
B. 40 - 80 Mol-% n-Decamethylendiamin-1,10
20 - 60 Mol-% Bis(4-aminocyclohexyl)methan erhalten worden sind.

In einer weiteren bevorzugten Ausführungsform werden solche Copolyamide verwendet, bei denen bis zu 50 Mol-% der Isophthalsäure durch Terephthalsäure ersetzt sind.

Die den erfindungsgemäßen Formmassen zugrundeliegenden Copolyamide weisen eine relative Lösungsviskosität ($n_{rel}$) im Bereich von 1,4 bis 2,1, vorzugsweise im Bereich von 1,55 bis 1,95 auf. Der Glaspunkt ($T_g$) der Copolyamide liegt im Bereich von 120 bis 180 °C, vorzugsweise im Bereich von 140 bis 170 °C.

Die Herstellung der Copolyamide ist grundsätzlich bekannt. Die Polykondensation der Komponenten erfolgt in der Schmelze. Gegebenenfalls kann in Gegenwart einer vom Phosphor abgeleiteten Säure der allgemeinen Formel $H_3PO_n$ mit n = 2 bis 4 oder Triphenylphosphit gearbeitet werden.

Geeignete, vom Phosphor abgeleitete Säuren sind hypophosphorige Säure, phosphorige Säure, Phosphorsäure.

Bei Zusatz eines Katalysators wird dieser in Mengen von 0,001 bis 1 Mol-%, vorzugsweise 0,001 bis 0,1 Mol-% - bezogen auf die Summe aller Monomeren - eingesetzt.

Die Reaktion wird in der Schmelze bei Temperaturen im Bereich von 200 bis 350 °C, vorzugsweise von 210 bis 320 °C durchgeführt.

Üblicherweise wird unter Inertgas bei Normaldruck gearbeitet. Es kann jedoch auch bei Über- bzw. Unterdruck gearbeitet werden.

Zur Erhöhung des Molekulargewichtes können die Copolyamide einer Festphasennachkondensation in einer Inertgasatmosphäre unterzogen werden.

Die Copolyamide werden auf üblichen Maschinen durch Spritzguß oder Extrusion zu Formmassen verarbeitet.

Die Formmassen können zusätzlich noch Füllstoffe, wie Talkum, oder Verstärkungsmittel, wie Glas-, ARAMID[R] oder Kohlefasern, sowie andere übliche Zusätze, wie z. B. Pigmente oder Stabilisatoren, enthalten.

Die Formmassen werden nach üblichen Verfahren wie Spritzguß, Extrusion o. ä. zu Formteilen, Fasern, Folien usw. verarbeitet.

Die erfindungsgemäßen Formmassen weisen eine überraschend hohe Beständigkeit gegenüber Alkoholen auf, ohne ihre guten Allgemeineigenschaften, insbesondere die Beständigkeit gegen kochendes Wasser einzubüßen.

Die in der Beschreibung und den Beispielen genannten Parameter wurden mit Hilfe nachstehender Verfahren bestimmt.

Die relative Lösungsviskosität ($n_{rel}$) wurde an 0,5 Gew.-%igen Polyamidlösungen in m-Kresol bei 25 °C bestimmt.

Die Glastemperatur ($T_g$) resultiert aus DSC-Messungen bei einer Aufheizrate von 20 °K/min.

Beispiele

| Beispiel 1 | | | |
|---|---|---|---|
| Einsatzstoffe: | 8,306 kg | Isophthalsäure | (50 Mol) |
| | 4,308 kg | n-Decamethylendiamin-1,10 | (25 Mol) |
| | 5,258 kg | Bis(4-aminocyclohexyl)methan | (25 Mol) |
| | 18,000 kg | Wasser | |
| | 0,350 g | $H_3PO_2$ (als 50 Gew.-%ige wässrige Lösung) | |

Die Einsatzstoffe wurden in Wasser unter Stickstoff in einem Polykondensationsreaktor bei 170 °C und bei einem Druck von 9 bar gelöst. Die Temperatur der Reaktionsmischung wurde unter Aufrechterhaltung des Drucks auf 230 °C erhöht, dann wurde 1 h bei dieser Temperatur gerührt. Anschließend wurde die Temperatur auf 300 °C erhöht. Das freiwerdende Wasser wurde abdestilliert. Nach 4 h bei 300 °C wurde das Copolyamid aus dem Reaktor ausgefahren.

$n_{rel}$ = 1,72 Tg = 163 °C

| Beispiel 2 | | | |
|---|---|---|---|
| Einsatzstoffe: | 4,984 kg | kg Isophthalsäure | (30 Mol) |
| | 3,323 kg | Terephthalsäure | (20 Mol) |
| | 6,032 kg | n-Decamethylendiamin-1,10 | (35 Mol) |
| | 3,155 kg | Bis(4-aminocyclohexyl)methan | (15 Mol) |
| | 17,000 kg | Wasser | |
| | 0,340 g | $H_3PO_2$ (als 50 Gew.-%ige wässrige Lösung) | |

Die Polykondensation wurde analog Beispiel 1 durchgeführt.

$n_{rel}$ = 1,65 Tg = 145 °C

| Beispiel 3 | | | |
|---|---|---|---|
| Einsatzstoffe: | 8,306 kg | Isophthalsäure | (50 Mol) |
| | 3,963 kg | n-Decamethylendiamin-1,10 | (23 Mol) |
| | 5,679 kg | Bis(4-aminocyclohexyl)methan | (27 Mol) |
| | 18,000 kg | Wasser | |

Die Polykondensation wurde analog Beispiel 1 durchgeführt.

$n_{rel}$ = 1,61 Tg = 167 °C

Beispiel 4

Die nach den Beispielen 1 bis 3 hergestellten Copolyamide wurden mit zwei handelsüblichen, als gegen kochendes Wasser beständig bezeichnete Copolyamide (A) und (B) verglichen.

Copolyamid (A) (TROGAMID[R] T) enthält als Monomere, Terephthalsäure und Trimethylhexamethylendiamin (Isomerengemisch aus zu etwa gleichen Gewichtsteilen 2,4,4- und 2,2,4-Trimethylhexamethylendiamin).

Copolyamid (B) (GRILLAMID[R] TR 55) ist aus ca. 30 Mol-% Isophthalsäure, ca. 30 Mol-% 3,3′-Dimethyl-4,4′-diaminodicyclohexylmethan und ca. 40 Mol-% Laurinlactam als Monomeren aufgebaut.

Die erfindungsgemäßen Copolyamide sowie die Vergleichsprodukte wurden 3 Wochen bei Raumtemperatur in Ethanol gelagert. Während die erfindungsgemäßen Copolyamide keine Veränderung in Aussehen und Lösungsviskosität zeigten, verklebten die Vergleichsprodukte bereits nach wenigen Stunden. Der Kochwassertest (24 h in siedendem Wasser) führte bei den erfindungsgemäßen Copolyamiden ebenfalls zu keiner Veränderung, beim Copolyamid (A) wurde eine starke Eintrübung und beim Copolyamid (B) eine schwache Trübung beobachtet.

**Ansprüche**

1. Gegenüber Alkoholen und kochendes Wasser beständige Formmasse auf Basis eines amorphen Copolyamids, das durch Polykondensieren von
A. Isophthalsäure
mit
B. 20 - 80 Mol-% n-Decamethylendiamin-1,10
20 - 80 Mol-% Bis(4-aminocyclohexyl)methan
erhalten worden ist.
2. Formmasse gemäß Anspruch 1,
dadurch gekennzeichnet,
daß das darin enthaltene Copolyamid durch Polykondensieren von
A. Isophthalsäure
mit
B. 40 - 80 Mol-% n-Decamethylendiamin-1,10
20 - 60 Mol-% Bis(4-aminocyclohexyl)methan
erhalten worden ist.
3. Formmassen gemäß Anspruch 1 und 2,
dadurch gekennzeichnet,
daß bis zu 50 Mol-% der Isophthalsäure durch Terephthalsäure ersetzt sind.